# EUROPÄISCHE PATENTSCHRIFT

(11) **EP 1 768 874 B1**
(45) Veröffentlichungstag und Bekanntmachung des Hinweises auf die Patenterteilung: **17.03.2010**
(21) Anmeldenummer: 05768099.3
(22) Anmeldetag: 07.07.2005
(51) Int. Cl.: B60R 9/055, F16B 2/10

(54) **DACHKOFFER MIT EINER HALTERUNGSVORRICHTUNG**
ROOF BOX WITH FIXING DEVICE
COFFRE DE TOIT AVEC DISPOSITIF DE FIXATION

(30) Priorität: 20.07.2004 DE 102004035154
(43) Veröffentlichungstag der Anmeldung: 04.04.2007
(73) Patentinhaber: Thule Sweden AB, 330 33 Hillerstorp (SE)
(72) Erfinder: EMMERLING, Alexander, 92360 Sulzbürg (DE); FRITSCHE, Günther, 92353 Postbauer (DE)
(74) Vertreter: Blaumeier, Jörg
(86) Internationale Anmeldenummer: PCT/DE2005/001194
(87) Internationale Veröffentlichungsnummer: WO 2006/007813

(56) Entgegenhaltungen:
- EP-A- 0 777 057
- EP-A- 1 338 474
- DE-B- 1 189 323

## Beschreibung

Die Erfindung betrifft einen Dachkoffer mit einer Halterungsvorrichtung zur Befestigung an auf einem Fahrzeugdach befestigten Querträgern, mit zweiarmigen, den Boden des Dachkoffers durchsetzenden und verspannbaren Spannbacken.

Aus der EP 1 338 474 A1 ist ein gattungsgemäßer Dachkoffer bekannt. Die Halterungsvorrichtung besitzt einen im Inneren des Dachkoffers angeordneten Montagekörper, der Öffnungen für L-förmige Verbindungsmittel aufweist. Diese Verbindungsmittel sind in einem Antriebsteil gehaltert, das ein Außengewinde aufweist, das mit einem entsprechenden Innengewinde eines Drehknopfes zusammenwirkt. Ausgehend von der verriegelten Stellung schraubt sich das Antriebsteil beim Drehen des Drehknopfes in den Drehknopf, worauf die L-förmigen Haken zunächst vertikal abgesenkt werden. Durch die spezielle Ausgestaltung der Öffnungen des Montagekörpers wird die Translationsbewegung mit einer Schwenkbewegung überlagert, sodass die Haken auseinanderschwenken. Durch diese Zwangsführung ist die Schwenkbewegung immer mit der Translationsbewegung gekoppelt. Um ein Verklemmen beim Ver- oder Entriegeln zu vermeiden, müssen die beweglichen Teile mit relativ großem Spiel gefertigt werden, sodass der Eindruck einer wackeligen Konstruktion entsteht. Ein weiterer Nachteil ist darin zu sehen, dass die Haken aufwändige Stanz-Biege-Teile sind, deren Tragfähigkeit bei breiten und hohen Dachträgern begrenzt ist.

Der Erfindung liegt daher das Problem zugrunde, einen Dachkoffer mit einer Halterungsvorrichtung anzugeben, die robust aufgebaut ist und eine zuverlässige Ver- und Entriegelung ermöglicht.

Zur Lösung dieses Problems ist bei einem Dachkoffer der eingangs genannten Art erfindungsgemäß vorgesehen, dass die Spannbacken an einem im Inneren des Dachkoffers anbringbaren Tragkörper um eine ortsfeste Drehachse schwenkbar gelagert sind und innen liegende Endabschnitte der Spannbacken an einem Anschlagteil anliegen, das durch die Drehung eines Betätigungselements vertikal verschiebbar ist, um die Spannbacken durch eine reine Schwenkbewegung zwischen einer Verriegelungs- und einer Entriegelungsstellung zu bewegen.

Der erfindungsgemäße Dachkoffer ist so aufgebaut, dass die zweiarmig ausgebildeten Spannbacken an dem Tragkörper verschwenkbar gelagert sind. Dementsprechend führen die Spannbacken bei der Betätigung der Halterungsvorrichtung eine reine Schwenk- bzw. Drehbewegung um ihre Drehachse durch. Da die Spannbacken mit ihren innen liegenden Endabschnitten stets an dem Tragkörper anliegen, ist der gesamte Mechanismus spielfrei, wodurch ein zuverlässiger Halt des Dachkoffers an den Querträgern gewährleistet wird. Durch das Drehen des Betätigungselements werden die Spannbacken zueinander oder auseinander geschwenkt, um den Dachkoffer zu verriegeln oder entriegeln.

Das Anschlagteil des erfindungsgemäßen Dachkoffers kann bevorzugt ein Gewinde aufweisen, das mit einem komplementären Gewinde eines drehfest mit dem Betätigungselement verbundenen Schraubelements zusammenwirkt und das Anschlagteil bei der Drehung des Betätigungselements vertikal verschiebt. Beim Drehen des Betätigungselements wird das Anschlagteil wie auf einer Spindel herauf- oder herunterbewegt. Da die Endabschnitte der Spannbacken an dem Anschlagteil anliegen, führt die aufwärts oder abwärts gerichtete Bewegung des Anschlagteils zu einer Verschwenkung der Spannbacken.

Eine besonders gute Funktion der Halterungsvorrichtung kann erzielt werden, wenn das Schraubelement im Wesentlichen zylinder- oder rohrförmig ausgebildet ist und ein Außengewinde aufweist, das mit einem Innengewinde des Anschlagteils zusammenwirkt. Das Schraubelement ist mit dem Betätigungselement verbunden und kann drehbar in oder an dem Tragkörper gelagert sein, sodass eine Drehung des Betätigungselements eine Drehung des Außengewindes des Schraubelements bewirkt. Das Schraubelement kann an einer Führung in oder an dem Tragkörper gelagert sein, die vorzugsweise als Zapfen ausgebildet ist, auf den das Schraubelement aufsetzbar ist. Bei der Drehung des Betätigungselements bleibt das damit verbundene Schraubelement an seiner Position, da es nur gedreht werden kann. Das mit dem Schraubelement über sein Innengewinde zusammenwirkende Anschlagteil wird hingegen bei der Drehung des Schraubelements vertikal bewegt.

Eine weitere Verbesserung kann dadurch erzielt werden, dass eine oder jede Spannbacke durch ein Federelement beaufschlagt wird, das den innen liegenden Endabschnitt der Spannbacke gegen das Anschlagteil drückt. Da in jeder Position die Kraft des Federelements auf die Spannbacke einwirkt, erfolgt die Ver- und Entriegelung spielfrei. Die außen liegenden Enden der Spannbacken werden durch die Federelemente permanent in der geöffneten Stellung gehalten, wobei die innen liegenden Endabschnitte der Spannbacken an dem Anschlagteil anliegen. Auf diese Weise werden die Spannbacken selbsttätig soweit wie möglich geöffnet, wodurch die Montage der Halterungsvorrichtung erleichtert wird. Es wird bevorzugt, dass das Federelement als Blattfeder ausgebildet ist. Das Federelement kann sich an dem Tragkörper oder an einer anderen Stelle abstützen, sofern sichergestellt ist, dass die Spannbacken durch das Federelement gegen das Anschlagteil gedrückt werden.

Es liegt auch im Rahmen der Erfindung, dass die Spannbacken mit einer Ummantelung versehen sind. Vorzugsweise kann die Mantelung aus Kunststoff bestehen, die die metallischen Spannbacken umgibt und die Oberfläche der Querträger schützt.

Gemäß einer Weiterbildung der Erfindung kann es vorgesehen sein, dass die Spannbacken in parallelen Ebenen angeordnet und bewegbar sind. Vorzugsweise sind beide Spannbacken um ein bestimmtes Maß parallel und entgegengesetzt zueinander verschoben, die Verschiebung entspricht wenigstens jeweils der halben Dicke der Spannbacken. Dadurch wird ermöglicht, dass die Spannbacken beim Verriegeln der Halterungsvorrichtung aneinander vorbeibewegt werden können und in der Verriegelungsstellung nebeneinander liegen. Auf diese Weise werden die übertragenen Kräfte auf beide Spannbacken verteilt.

In weiterer Ausgestaltung der Erfindung kann es vorgesehen sein, dass ein außerhalb des Dachkoffers angeordnetes oder anordenbares Zentrierelement vorgesehen ist, das an den auf dem Fahrzeugdach befestigten Querträger anlegbar ist und den Querträger beim Verriegeln zentriert. Zweckmäßig weist das Zentrierelement Anlageflächen auf, die einen näherungsweise konkaven Aufnahmeraum für den Querträger bilden. Das Zentrierelement ist mit dem Tragkörper verbunden und befindet sich im eingebauten Zustand an der Unterseite des Dachkoffers. Beim Verriegeln der Halterungsvorrichtung führen die schräg zueinander verlaufenden Anlageflächen automatisch zu einer Zentrierung der Halferungsvorrichtung auf dem Querträger.

Weitere Vorteile und Einzelheiten der Erfindung werden anhand eines Ausführungsbeispiels unter Bezugnahme auf die Figuren erläutert. Die Figuren sind schematische Darstellungen und zeigen:
- Fig. 1: eine Explosionszeichnung eines Ausführungsbeispiels der Erfindung;
- Fig. 2: eine geschnittene Ansicht der Halterungsvorrichtung von Fig. 1;
- Fig. 3: eine Ansicht der wesentlichen Teile der Halterungsvorrichtung in der Entriegelungsstellung; und
- Fig. 4: die in Fig. 3 gezeigte Halterungsvorrichtung in der Verriegelungsstellung.

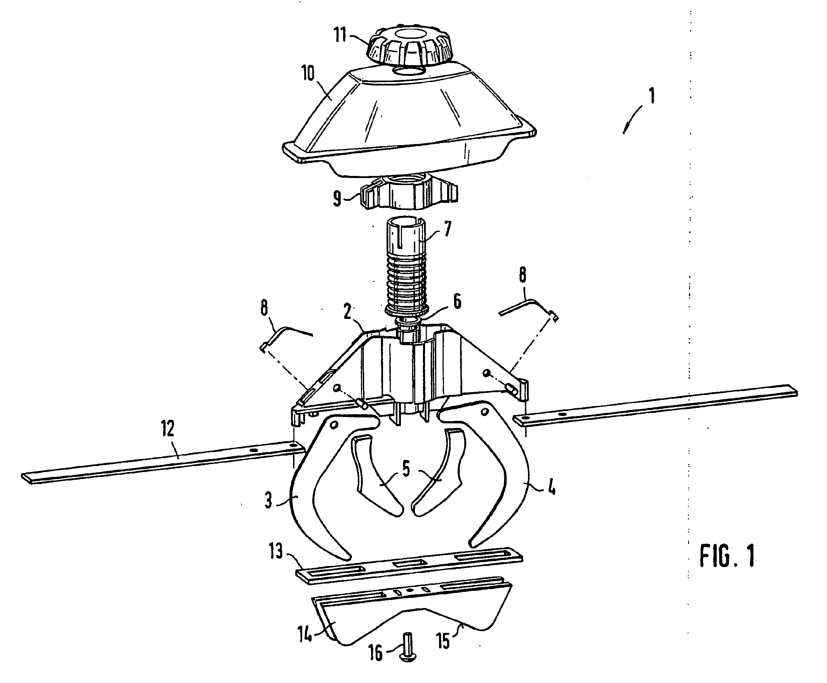

Die in Fig. 1 gezeigte Halterungsvorrichtung 1 besteht aus einem Tragkörper 2, an dem zweiarmig ausgebildete Spannbacken 3, 4 schwenkbar gelagert sind. Die Spannbacken 3, 4 sind sichelförmig ausgebildet und über Bolzen an dem Tragkörper 2 drehbar gelagert. Die aus Metall, vorzugsweise aus Stahl hergestellten Spannbacken 3, 4 weisen an ihren außerhalb des Dachkoffers liegenden Enden aus Kunststoff bestehende Ummantelungen 5 auf. Die Spannbacken 3, 4 sind Stanzteile und können kostengünstig hergestellt werden.

Der Tragkörper 2 besitzt eine im Wesentlichen trapezförmige Grundform und ist teilweise hohl ausgebildet. Der mittlere Teil des Tragkörpers 2 weist einen rohrförmigen Zapfen 6 auf, der zur Lagerung eines Schraubelements 7 dient, das auf dem Zapfen 6 frei drehbar ist. Im Bereich der beiden seitlichen, spitz zulaufenden Endabschnitte des Tragkörpers 2 sind jeweils als Blattfedern 8 ausgebildete Federelemente vorgesehen, die mit ihrem einen Ende am Tragkörper 2 abgestützt sind und mit ihrem anderen Ende an den oberen Flächen der Spannbacken 3, 4 anliegen und diese durch die Federkraft gegen ein Anschlagteil 9 drücken.

Das Anschlagteil 9 weist ein Innengewinde auf, das an das Außengewinde des Schraubelements 7 angepasst ist, sodass das Anschlagteil 9 auf das Schraubelement 7 aufschraubbar ist. Bei in den Tragkörper 2 eingesetztem Schraubelement 7 kann das Anschlagteil 9 in dem Freiraum im Inneren des Tragkörpers 2 bewegt werden. Das Anschlagteil 9 weist zwei seitliche, gegenüberliegende Anschlagflächen auf, die Endabschnitte des Anschlagteils 9 sind im Wesentlichen U-förmig ausgebildet. Auf diesen Anschlagflächen stützen sich die innen liegenden Endabschnitte der Spannbacken 3, 4 ab, die durch die Blattfedern 8 gegen das Anschlagteil 9 gedrückt werden.

In Fig. 1 ist ferner ein Gehäuse 10 dargestellt, das aus einem oberen und einem unteren Gehäuseteil besteht, die im Wesentlichen innerhalb des Dachkoffers befestigt sind. Oberhalb des Gehäuses 10 ist ein Drehgriff 11 als Betätigungselement gezeigt, der im montierten Zustand drehfest mit dem Schraubelement 7 verbunden ist.

Fig. 1 zeigt ferner einen Dichtstreifen 12, eine Gummidichtung 13, die die Halterungsvorrichtung zur Außenseite des Dachkoffers hin abdichtet und als Federelement dient, sowie ein Zentrierelement 14. Das Zentrierelement 14 weist schräg zueinander verlaufende Anlageflächen 15 auf, die an den Querträger des Autodachs anlegbar sind. Die schrägen Anlageflächen 15 des Zentrierelements 14 bewirken eine selbsttätige Zentrierung der Halterungsvorrichtung 1 beim Verriegeln. Eine Schraube 16 dient zur Befestigung des Zentrierelements 14 an dem Tragkörper 2.

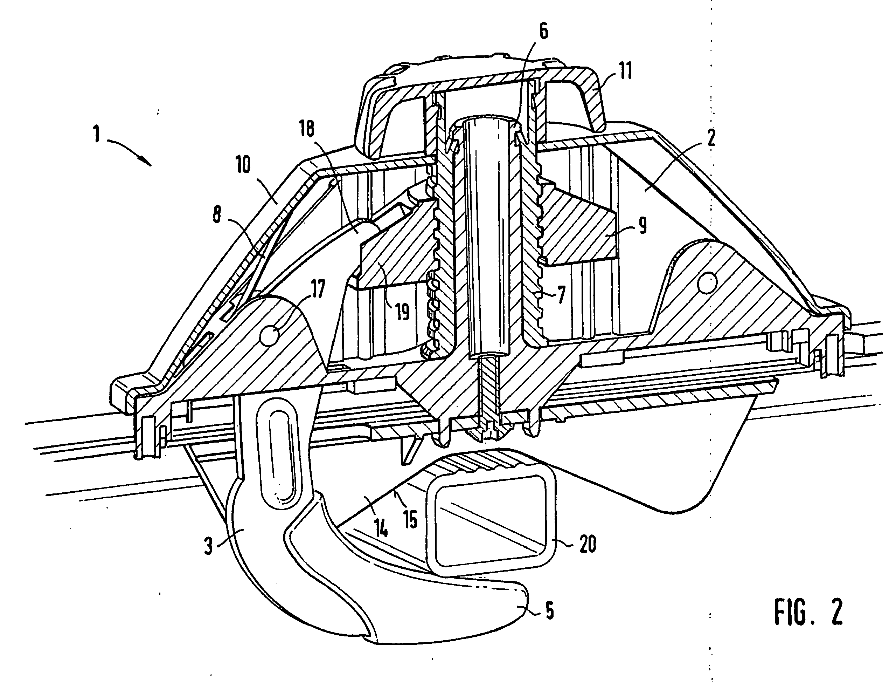

Fig. 2 zeigt eine geschnittene Ansicht der Halterungsvorrichtung von Fig. 1. In dieser Ansicht ist zur besseren Übersicht lediglich die Spannbacke 3 dargestellt, die andere Spannbacke 4 kann symmetrisch bewegt werden. Aus der Zusammenbauzeichnung von Fig. 2 ist ersichtlich, dass das Schraubelement 7 auf dem Zapfen 6 des Tragkörpers 2 drehbar gelagert ist. Das Außengewinde des Schraubelements 7 und das Innengewinde des Anschlagteils 9 greifen ineinander, sodass das Anschlagteil 9 bei einer Drehung des Drehgriffs 11, der drehfest mit dem Schraubelement 7 verbunden ist, entlang der Gewindeachse vertikal verschoben werden kann. Bei einer Drehung des Drehgriffs 11 im Uhrzeigersinn wird das Anschlagteil 9 nach oben bewegt, bei einer Drehung gegen den Uhrzeigersinn wird das Anschlagteil 9 nach unten bewegt. Diese Bewegungen werden begrenzt, wenn das Anschlagteil 9 mit seiner oberen Seite gegen die Innenfläche des Gehäuses 10 oder mit seiner unteren Seite gegen den Boden des Tragkörpers 2 stößt.

Die Spannbacke 3 ist über einen Bolzen 17 drehbar in dem Tragkörper 2 gelagert. Der innerhalb des Gehäuses 10 liegende Endabschnitt 18 der Spannbacke 3 ist in Kontakt mit dem U-förmigen seitlichen Endabschnitt 19 des Anschlagteils 9. Die Vorspannung der Blattfeder 8 bewirkt, dass die Spannbacke 3 in jeder Lage gegen das Anschlagteil 9 gedrückt wird. Dementsprechend erfährt das außen liegende freie Ende der Spannbacke 3 permanent eine nach außen drückende Kraft.

In Fig. 2 ist auch gezeigt, dass die Anlageflächen 15 des Zentrierelements 14 an einem Querträger 20 anliegen. Der Querträger 20 hat zwei Berührpunkte bzw. Berührflächen mit dem Zentrierelement 14 und zwei Berührpunkte bzw. -flächen mit der Ummantelung 5 der Spannbacken 3, 4.

Die Einzelteile der Halterungsvorrichtung 1 sind über Schnappverbindungen miteinander verbunden, die Halterungsvorrichtung 1 ist mit dem Boden des Dachkoffers verschraubt oder über eine Schnappverbindung am Boden befestigt.

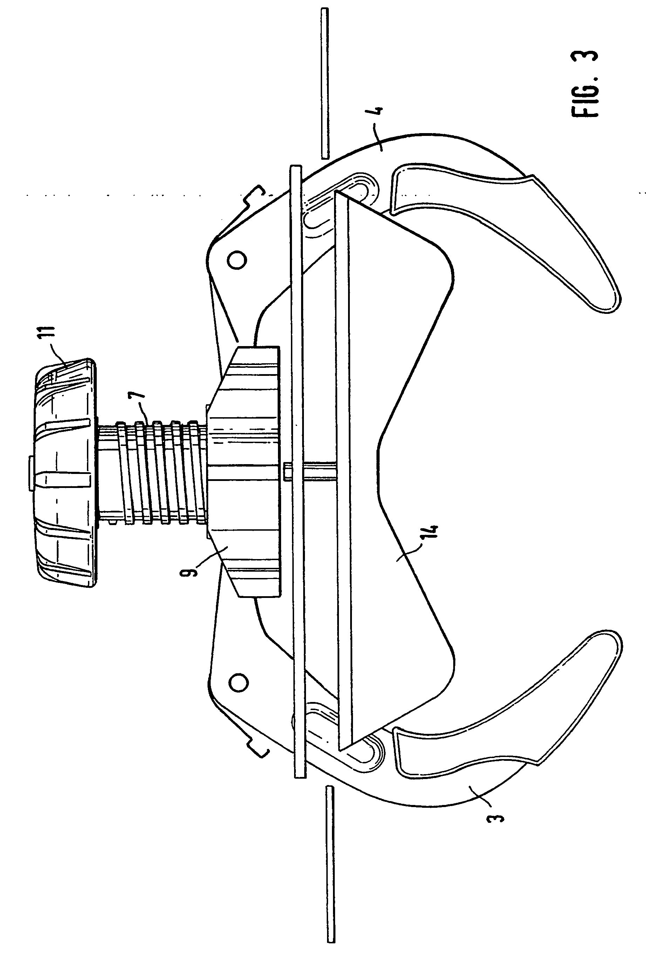

Fig. 3 ist eine Ansicht der wesentlichen Teile der Haltevorrichtung in der Entriegelungsstellung. In dieser Ansicht ist der Tragkörper nicht dargestellt. Das Anschlagteil 9 befindet sich in seiner untersten Stellung, die das Anschlagteil 9 berührenden Spannbacken 3, 4 befinden sich in der maximalen Öffnungsstellung. In dieser Lage kann die am Dachkoffer befestigte Haltevorrichtung 1 leicht auf die Querträger des Kraftfahrzeugs aufgesetzt werden. Anschließend wird der Drehgriff 11 im Uhrzeigersinn gedreht, sodass das Anschlagteil 9 entlang des Schraubelements 7 vertikal nach oben bewegt wird. Bei der Bewegung des Anschlagteils 9 werden die Spannbacken 3, 4 mit bewegt und um ihren Drehpunkt geschwenkt, sodass sie geschlossen werden.

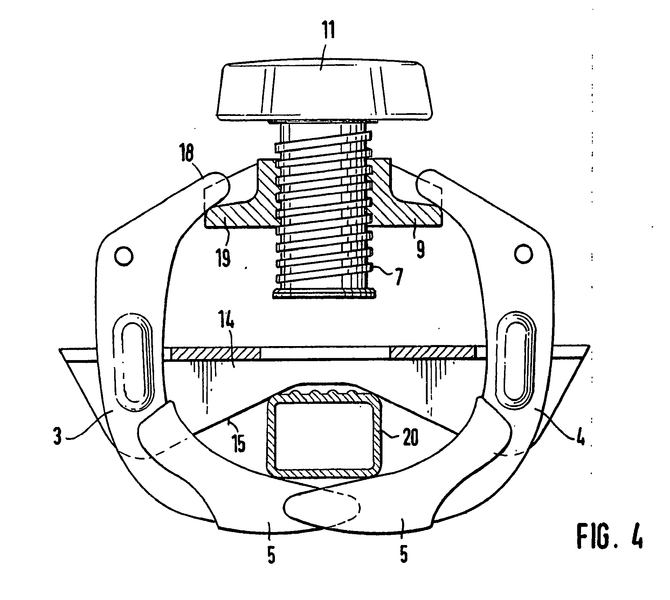

Fig. 4 zeigt die in Fig. 3 gezeigte Ansicht der Halterungsvorrichtung 1 in der Verriegelungsstellung. Das Anschlagteil 9 befindet sich jetzt in seiner obersten Lage, die Spannbacken 3, 4 sind entsprechend zueinander geschwenkt worden, sodass die außen liegenden Enden der Spannbacken 3, 4 hintereinander liegen und den Querträger vollständig umgreifen können.

Das Anschlagteil 9 und der Tragkörper 2 sind so ausgebildet, dass die beiden Spannbacken 3, 4 in parallelen Ebenen angeordnet und bewegbar sind. Daher können die Spannbacken 3, 4 beim Verriegeln soweit bewegt werden, bis sie nebeneinander liegen.

## Patentansprüche

1. Dachkoffer, mit wenigstens einer Halterungsvorrichtung (1) zur Befestigung an auf einem Fahrzeugdach befestigten Querträgern, mit zweiarmigen, den Boden des Dachkoffers durchsetzenden und verspannbaren Spannbacken (3, 4), wobei die Spannbacken (3, 4) an einem im Inneren des Dachkoffers anbringbaren Tragkörper (2) um eine Drehachse schwenkbar gelagert sind und innen liegende Endabschnitte (18) der Spannbacken (3, 4) an einem Anschlagteil (9) anliegen, das durch die Drehung eines Betätigungselements vertikal verschiebbar ist, um die Spannbacken (3, 4) durch eine Schwenkbewegung zwischen einer Verriegelungs- und einer Entriegelungsstellung zu bewegen, **dadurch gekennzeichnet, dass** die Spannbacken (3,4) um eine ortfeste Drehachse schwenkbar gelagert sind, und die Schwenkbewegung eine reine Schwenkbewegung ist.

2. Dachkoffer nach Anspruch 1, **dadurch gekennzeichnet, dass** das Anschlagteil (9) ein Gewinde aufweist, das mit einem komplementären Gewinde eines drehfest mit dem Betätigungselement verbundenen Schraubelements (7) zusammenwirkt und das Anschlagteil (9) bei der Drehung des Betätigungselements vertikal verschiebt.

3. Dachkoffer nach Anspruch 2, **dadurch gekennzeichnet, dass** das Schraubelement (7) im Wesentlichen zylinder- oder rohrförmig ausgebildet ist und ein Außengewinde aufweist, das mit einem Innengewinde des Anschlagteils (9) zusammenwirkt.

4. Dachkoffer nach Anspruch 2 oder 3, **dadurch gekennzeichnet, dass** das Schraubelement (7) drehbar in oder an dem Tragkörper (2) gelagert ist, vorzugsweise an einer als Zapfen (6) ausgebildeten Führung.

5. Dachkoffer nach einem der vorangehenden Ansprüche, **dadurch gekennzeichnet, dass** eine oder jede Spannbacke (3, 4) durch ein Federelement beaufschlagt wird, das den innen liegenden Endabschnitt (18) der Spannbacke (3, 4) gegen das Anschlagteil (9) drückt.

6. Dachkoffer nach Anspruch 5, **dadurch gekennzeichnet, dass** das Federelement als Blattfeder (8) ausgebildet ist.

7. Dachkoffer nach Anspruch 5 oder 6, **dadurch gekennzeichnet, dass** sich das Federelement an dem Tragkörper (2) abstützt.

8. Dachkoffer nach einem der vorangehenden Ansprüche, **dadurch gekennzeichnet, dass** die Spannbacken (3, 4) mit einer vorzugsweise aus Kunststoff bestehenden Ummantelung (5) versehen sind.

9. Dachkoffer nach einem der vorangehenden Ansprüche, **dadurch gekennzeichnet, dass** die Spannbacken (3, 4) in parallelen Ebenen angeordnet und bewegbar sind.

10. Dachkoffer nach einem der vorangehenden Ansprüche, **dadurch gekennzeichnet, dass** ein außerhalb des Dachkoffers angeordnetes oder anordenbares Zentrierelement (14) vorgesehen ist, das an den auf dem Fahrzeugdach befestigten Querträger anlegbar ist und den Querträger beim Verriegeln zentriert.

11. Dachkoffer nach Anspruch 10, **dadurch gekennzeichnet, dass** das Zentrierelement (14) Anlageflächen (15) aufweist, die einen näherungsweise konkaven Aufnahmeraum für den Querträger bilden.

12. Dachkoffer nach einem der vorangehenden Ansprüche, **dadurch gekennzeichnet, dass** das Betätigungselement als Drehgriff (11) ausgebildet ist.

13. Dachkoffer nach einem der vorangehenden Ansprüche, **dadurch gekennzeichnet, dass** sie ein den Tragkörper (2) zumindest teilweise abdeckendes Gehäuse (10) aufweist.

14. Dachkoffer nach einem der vorangehenden Anspruche, **dadurch gekennzeichnet, dass** er vier Halterungsvorrichtungen (1) aufweist.

## Claims

1. Roof box, with at least one fixing device (1) for fastening to crossbars fastened to a vehicle roof, said fixing device (1) having two-armed clamping jaws (3, 4) that extend through the bottom of the roof box and can be braced, said clamping jaws (3, 4) are mounted on a support base (2) fixed in the interior of the roof box in a manner so as to pivot about a swivelling axis and interior end sections (18) of the clamping jaws (3, 4) rest again a stop element (9) which is vertically displaced by rotating an actuating element in order to move move the clamping jaws (3, 4) by a swivel motion between a locked and an unlocked position, **characterized in that** the clamping jaws (3, 4) are mounted as to pivot about a stationary swivelling axis and the swivel motion is a pure swivel motion.

2. Roof box according to claim 1, **characterized in that** the stop element (9) has a thread which interacts with a complementary thread of a screw element (7) which is connected with the actuating element so as to be stationary and displaces the stop element (9) vertically when the actuating element is turned.

3. Roof box according to claim 2, **characterized in that** the screw element (7) is essentially cylindrical or tubular and has an external thread which interacts with an internal thread of the stop element (9).

4. Roof box according to claim 2 or 3, **characterized in that** the screw element (7) is swivel-mounted in or on the support base (2), preferably on a guide in the form of a pin (6).

5. Roof box according to any one of the preceding claims, **characterized in that** one or each clamping jaw (3, 4) is acted upon by a spring element which presses the interior end section (18) of the clamping jaw (3, 4) against the stop element (9).

6. Roof box according to claim 5, **characterized in that** the spring element is in the form of a leaf spring (8).

7. Roof box according to claim 5 or 6, **characterized in that** the spring element is braced on the support base (2).

8. Roof box according to any one of the preceding claims, **characterized in that** the clamping jaws (3, 4) are provided with a lining (5) consisting of plastic.

9. Roof box according to any one of the preceding claims, **characterized in that** the clamping jaws (3, 4) are arranged and movable in parallel planes.

10. Roof box according to any one of the preceding claims, **characterized in that** a centering element (14) is provided which is arranged, or can be arranged, outside of the roof box, can be placed on the crossbars fastened to the vehicle roof and which centers the crossbars when they are being locked.

11. Roof box according to claim 10, **characterized in that** the centering element (14) has contact surfaces (15) which form an almost concave receptacle for the crossbars.

12. Roof box according to any one of the preceding claims, **characterized in that** the actuating element is in the form of a control grip (11).

13. Roof box according to any one of the preceding claims, **characterized in that** it has a housing (10) which covers the support base (2) at least partially.

14. Roof box, **characterized in that** it has four fixing devices (1).

## Revendications

1. Coffre de toit, comportant au moins un dispositif de fixation (1) pour la fixation sur des traverses fixées sur le toit d'un véhicule, comportant des mors de serrage (3, 4) à deux bras, traversant le fond du coffre de toit et aptes à être bloqués, lesdits mors de serrage (3, 4) étant montés, de manière à pouvoir pivoter autour d'un axe de rotation, sur un corps de support (2), apte à être attaché à l'intérieur du coffre de toit, et des zones d'extrémité intérieures (18) des mors de serrage (3, 4) étant en appui contre une butée (9) qui peut être déplacée verticalement sous l'effet de la rotation d'un élément d'actionnement, afin de déplacer les mors de serrage (3, 4) entre une position de verrouillage et une position de déverrouillage sous l'effet d'un mouvement de pivotement, **caractérisé en ce que** les mors de serrage (3, 4) sont montés de manière à pouvoir pivoter autour d'un axe de rotation fixe, et le mouvement de pivotement est exclusivement un mouvement de pivotement.

2. Coffre de toit selon la revendication 1, **caractérisé en ce que** la butée (9) comporte un filetage qui coopère avec un filetage complémentaire d'un élément fileté (7), relié solidaire en rotation avec l'élément d'actionnement, et déplace verticalement la butée (9) au moment de la rotation de l'élément d'actionnement.

3. Coffre de toit selon la revendication 2, **caractérisé en ce que** l'élément fileté (7) est sensiblement cylindrique ou tubulaire et comporte un filetage extérieur, qui coopère avec un filetage intérieur de la butée (9).

4. Coffre de toit selon la revendication 2 ou 3, **caractérisé en ce que** l'élément fileté (7) est monté de manière rotative dans ou sur le corps de support (2), de préférence sur un guidage réalisé sous la forme d'une goupille (6).

5. Coffre de toit selon l'une quelconque des revendications précédentes, **caractérisé en ce qu'**un ou chaque mors de serrage (3, 4) est sollicité par un élément de ressort qui pousse la zone d'extrémité intérieure (18) des mors de serrage (3, 4) contre la butée (9).

6. Coffre de toit selon la revendication 5, **caractérisé en ce que** l'élément de ressort est réalisé sous la forme d'un ressort à lames (8).

7. Coffre de toit selon la revendication 5 ou 6, **caractérisé en ce que** l'élément de ressort prend appui sur le corps de support (2).

8. Coffre de toit selon l'une quelconque des revendications précédentes, **caractérisé en ce que** les mors de serrage (3, 4) sont munis d'une enveloppe (5) réalisée, de préférence, en matière plastique.

9. Coffre de toit selon l'une quelconque des revendications précédentes, **caractérisé en ce que** les mors de serrage (3, 4) sont disposés et aptes à se déplacer dans des plans parallèles.

10. Coffre de toit selon l'une quelconque des revendications précédentes, **caractérisé en ce qu'**il est prévu un élément de centrage (14), qui est disposé ou peut être disposé à l'extérieur du coffre de toit et qui peut prendre appui sur la traverse fixée sur le toit du véhicule et centre la traverse au moment du verrouillage.

11. Coffre de toit selon la revendication 10, **caractérisé en ce que** l'élément de centrage (14) comporte des surfaces d'appui (15), qui forment un logement à peu près concave pour la traverse.

12. Coffre de toit selon l'une quelconque des revendications précédentes, **caractérisé en ce que** l'élément d'actionnement est réalisé sous la forme d'une poignée rotative (11).

13. Coffre de toit selon l'une quelconque des revendications précédentes, **caractérisé en ce qu'**il comporte un carter (10) recouvrant au moins partiellement le corps de support (2).

14. Coffre de toit selon l'une quelconque des revendications précédentes, **caractérisé en ce qu'**il comporte quatre dispositifs de fixation (1).
